# EUROPÄISCHE PATENTSCHRIFT

(11) **EP 4 188 710 B1**
(45) Veröffentlichungstag und Bekanntmachung des Hinweises auf die Patenterteilung: **11.06.2025**
(21) Anmeldenummer: 21749590.2
(22) Anmeldetag: 26.07.2021
(51) Int. Cl.: B32B 37/10, B30B 5/02, B30B 5/04, B32B 17/10

(54) **BEABSTANDUNGSVORRICHTUNG FÜR EIN SYSTEM ZUM LAMINIEREN**
SPACER DEVICE FOR A SYSTEM FOR LAMINATING
DISPOSITIF D'ESPACEMENT POUR UN SYSTÈME DE STRATIFICATION

(30) Priorität: 28.07.2020 DE 102020119857
(43) Veröffentlichungstag der Anmeldung: 07.06.2023
(73) Patentinhaber: Hanwha Q CELLS GmbH, 06766 Bitterfeld-Wolfen/OT Thalheim (DE)
(72) Erfinder: ALBRECHT, Uwe, 06766 Bitterfeld-Wolfen (DE); KUNATH, Stephanie, 06766 Bitterfeld-Wolfen (DE); LENZ, Christoph, 06766 Bitterfeld-Wolfen (DE)
(74) Vertreter: LifeTech IP Spies & Behrndt Patentanwälte PartG mbB
(86) Internationale Anmeldenummer: PCT/EP2021/070824
(87) Internationale Veröffentlichungsnummer: WO 2022/023248

(56) Entgegenhaltungen:
- EP-A2- 2 236 287
- WO-A1-2014/046810
- US-A1- 2014 053 974
- US-B1- 6 585 837

## Beschreibung

Die vorliegende Erfindung bezieht sich auf eine Beabstandungsvorrichtung für ein System zum Laminieren eines Laminats, insbesondere von Photovoltaikmodulen, mit einer Membran, und auf ein Verfahren zur Herstellung einer solchen Beabstandungsvorrichtung.

### HINTERGRUND

Eine Produktion von Photovoltaikmodulen umfasst ein Laminieren von Schichten eines Laminats (Schichtstapel) unter Druck und erhöhter Temperatur. Für dieses Laminieren ist die Verwendung sogenannter Membran-Laminatoren verbreitet. Das Laminieren kann dabei weitgehend automatisiert durch ein System erfolgen, das insbesondere eine Vielzahl solcher Laminate in eine Laminationskammer transportiert, in der eine in einem Spannrahmen eingespannte Membran von oben auf das zu laminierende Laminat gedrückt wird. Gleichzeitig wird dem Laminat Wärme zugeführt und durch eine Absaugeinrichtung der Druck um das Laminat gesenkt, wodurch der Druck der Membran erhöht oder bewirkt werden kann.

Unter dem Druck der Membran, deren Fläche über die des Laminats hinausreicht, kann es dabei in Randbereichen des Laminats zu einer Überpressung kommen. Dies kann zu einer sogenannten Kantenverpressung bzw. zu "edge pinching", einer Verminderung der Dicke im Randbereich des Laminats, führen. Dadurch können Zugkräfte innerhalb des Laminats entstehen, die unmittelbar im Anschluss an die Produktion oder über längere Zeit eine Delamination oder auch beispielsweise einen Bruch einer Abdeckglasschicht bewirken können.

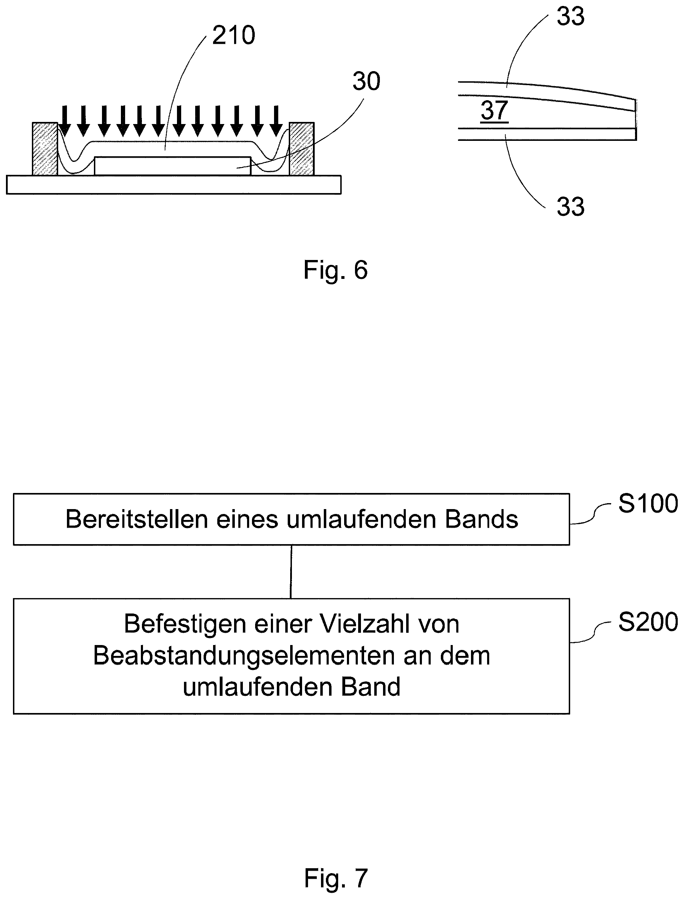

**Fig. 6** zeigt eine Darstellung für ein Zustandekommen einer solchen Kantenverpressung. Auf der linken Seite der Figur ist ein Querschnitt eines Systems zum Laminieren eines Laminats 30 dargestellt. Eine Membran 210 wird zum Laminieren auf das Laminat 30 aufgedrückt (z.B. durch Ausbildung eines geeigneten Luftüberdrucks oder Luftunterdrucks). In Membranlaminatoren kann eine solche Membran 210 beispielsweise eine Dicke von bis zu 8 mm und eine Fläche in einer Größenordnung von bis zu mehreren Quadratmetern aufweisen. In den Randbereichen des Laminats 30 überragt eine Fläche der Membran 210 das Laminat 30, wodurch ein mechanischer Druck, der durch die Membran 210 auf das Laminat 30 ausgeübt wird, das Laminat 30 dort stärker presst als in einem Mittelbereich des Laminats 30. Dadurch entsteht die Kantenverpressung des Laminats. Die rechte Seite der Figur zeigt vergrößert den verpressten Randbereich des Laminats 30 im Querschnitt. Das Laminat 30 umfasst hier zwei Glasschichten 33, angeordnet um eine Schicht 37, die einen Kunststoff und darin eingelassene Solarzellen aufweist. Glasschichten können beispielsweise Dicken von bis zu 2,5 mm, die Kunststoffschicht beispielsweise eine Dicke im Bereich eines Millimeters aufweisen, so dass das Laminat 30 unverpresst beispielsweise eine Dicke von 5 mm besitzen kann. Zum Rand des Laminats 30 (auf der rechten Seite der Figur) hin ist die Dicke des Laminats 30 aufgrund der Überpressung vermindert. Dadurch werden anhaltende Spannung verursacht, die die Lebensdauer und Qualität der Photovoltaikmodule einschränken.

Eine Vorrichtung nach dem Stand der Technik ist aus dem Dokument WO 2014/046810 A1 bekannt.

Es besteht ein Bedarf nach einer kostengünstigen und effizienten Unterdrückung der Kantenverpressung in Membran-Laminatoren, die sich vorteilhafterweise zudem für eine Nachrüstung von sich bereits im Betrieb befindlichen Membran-Laminatoren eignet, so dass bestehende automatisierte Prozesse weiterhin beibehalten werden können.

### KURZBESCHREIBUNG DER ERFINDUNG

Die oben genannte Aufgabe wird durch eine Beabstandungsvorrichtung nach Anspruch 1 und ein Verfahren zur Herstellung einer Beabstandungsvorrichtung nach Anspruch 11 gelöst. Die abhängigen Ansprüche beziehen sich auf vorteilhafte Weiterbildungen der Gegenstände der unabhängigen Ansprüche.

Die vorliegende Erfindung bezieht sich auf eine Beabstandungsvorrichtung für ein System zum Laminieren eines Laminats, insbesondere von Photovoltaikmodulen. Das System umfasst eine Membranhalteeinrichtung, die ausgebildet ist, um zum Laminieren eine Membran auf das Laminat unter Ausübung eines Drucks aufzubringen. Die Beabstandungsvorrichtung weist ein umlaufendes Band, eine Vielzahl von Beabstandungselementen, die mit dem Band verbunden und ausgebildet sind, um zumindest in einem Abschnitt des Bandes zumindest teilweise einen Rahmen für das Laminat zu bilden und dadurch beim Laminieren eine Kantenverpressung des Laminats zu unterdrücken und zumindest eine Schleppstange auf, die lösbar mit den Beabstandungselementen verbindbar ist und der zumindest teilweise ausgebildete Rahmen an der zumindest einen Schleppstange befestigt ist.

Die Membran kann dabei insbesondere in einem Spannrahmen gehalten werden, der auf das Laminat abgesenkt wird. Der Druck auf das Laminat kann dabei indirekt, also nicht durch einen direkten Kontakt, ausgeübt werden. Insbesondere kann beim Laminieren zwischen der Membran und dem Laminat eine Plane zum Schutz und zur besseren Ablösung der Membran vom Laminat nach dem Laminieren (ein sogenanntes "Releasesheet") liegen. Die Fläche der Membran überragt eine entsprechende Fläche des Laminats, und der durch die Beabstandungselemente teilweise ausgebildete Rahmen stützt die Membran neben dem Laminat in einer Weise ab, die geeignet ist, einen insbesondere durch die Spannung der Membran herrührenden erhöhten Druck im Randbereich des Laminats zu vermindern.

Der durch die Beabstandungselemente ausgebildete Rahmen kann nur teilweise sein; er braucht das Laminat insbesondere nicht vollständig zu umschließen. Ein Abstützen der Membran an bestimmten geeigneten Stellen kann für eine Verminderung der Kantenbelastung ausreichend sein. Zudem - oder alternativ - können Aussparungen des Rahmens durch eine Geometrie des Systems bedingt sein. Der Rahmen kann auch erst in Kombination von Beabstandungselementen ausgebildet werden, die auf mehrere Bänder verteilt sind.

Die Beabstandungselemente sind so ausgebildet, dass sie mit dem Band umlaufen können. Sie können jeweils einzeln direkt mit dem Band verbunden - beispielsweise aufgeklebt, aufgeschweißt, angenäht oder angeschraubt - sein. In Ausführungsbeispielen weist das Band zu seiner umlaufenden Bewegung aber auch Schleppstangen auf, und die Beabstandungselemente können einen zumindest teilweise ausgebildeten Rahmen umfassen, der an einer oder mehreren der Schleppstangen befestigt ist und mit dem Band umläuft. Dazu ist der Rahmen vorteilhafterweise ausgebildet, um in Umlaufrichtung flexibel, aber vertikal zum Band druckbeständig und formstabil zu sein. Dies kann beispielsweise durch Einbringen eines geeigneten Kunststoffmaterials (etwa Gummi) oder Metalls (etwa Kettenbänder) erreicht werden, welches den Rahmen ganz oder auch nur teilweise bildet.

Dementsprechend können die Beabstandungselemente sowohl flexibles Material wie beispielsweise Silikon- oder Teflonmaterialien oder Ethylen-Propylen-DienKautschuk wie EPDM oder nichtflexibles Material wie beispielsweise Aluminium oder Stahl aufweisen. Flexible Materialien können dabei insbesondere dem Umlaufen der Beabstandungselemente dienen und als durchgehende Formen, als Bänder, Schnüre, und/oder Seile, als Segmente mit Abständen zwischen einander oder auch in Komposition mit nichtflexiblen Materialien auftreten. Nichtflexible Materialien können beispielsweise als Kettenbänder, als Reißverschluss oder auch als Stangen, Zähne oder Stützelemente für die Beabstandungselemente verwendet sein.

Optional umfasst das Laminieren ein Ausbilden eines Unterdruckes, und die Beabstandungselemente sind so ausgebildet, dass der ausgebildete Rahmen Öffnungen aufweist, um beim Laminieren einen Austritt von Gas aus einem Bereich in oder um das Laminat zu begünstigen.

Beispielsweise existieren Membranlaminationssysteme, bei denen der Druck der Membran auf das Laminat zumindest teilweise durch ein Erzeugen eines Unterdrucks im Bereich um das Laminat aufgebaut wird. Alternativ oder zusätzlich fördert ein Evakuieren um das Laminat während des Laminierens einen Austritt von Luft aus dem Laminat. Dies kann insbesondere auch einer Vorbeugung von Luft- oder anderen Gaseinschlüssen im Laminat dienen.

Optional erfolgt beim Laminieren eine Verschmelzung von Kunststoff in dem Laminat, und die Beabstandungselemente sind so ausgebildet, dass der ausgebildete Rahmen Aussparungen aufweist oder einen Spalt zu dem Laminat bildet, dass austretender Kunststoff beim Laminieren aufgenommen bzw. abgeführt werden kann.

Ein Laminat für Photovoltaikmodule kann beispielsweise u.a. eine zwischen zwei Glasplatten gelagerte Schicht eines Kunststoffmaterials wie etwa Ethylenvinylacetat (EVA) oder Polyolefin (PO) umfassen, welches eine Vielzahl von Photovoltaikzellen sowie zugehörige Kontaktierungen einschließt. Beim Laminieren kann solches Kunststoffmaterial seitlich zwischen den Glasplatten aus dem Laminat austreten. Die Beabstandungselemente können ausgebildet sein, um beispielsweise durch ein geeignete Form eines aus den Beabstandungselementen gebildeten Rahmens diesen Austritt von Kunststoffmaterial zu ermöglichen und/oder zu begünstigen. So kann der Rahmen etwa auf einer dem Laminat zugewandten Seite Einbuchtungen, Verbreiterungen, Nuten, Kanäle und/oder sonstige Aussparungen aufweisen, die einen ausreichenden Platz für austretendes geschmolzenes Kunststoffmaterial bzw. Einkapselungsmaterial bieten.

Optional ist die Membranhalteeinrichtung ausgebildet, um die Membran in einer vertikalen Bewegung auf das Laminat aufzubringen, und die Beabstandungselemente sind so ausgebildet, dass beim Aufbringen der Membran auf das Laminat der ausgebildete Rahmen mit dem Laminat bündig abschließt.

Der bündige Abschluss soll ein übermäßiges Durchbiegen der Membran, wie es bei konventionellen Systemen der Fall ist, verhindern. Das kann beispielsweise dadurch erreicht werden, dass die Beabstandungselemente eine gleiche Höhe aufweisen wie das zu fertigende Laminat, und/oder zumindest auf einer der Membran zugewandten Seite möglichst nahe an Laminat heranreichen.

Die Höhe der Beabstandungselemente kann die Höhe des Laminats auch übertreffen. Insbesondere kann dies der Fall sein, wenn beim Pressen der Membran auf das Laminat ein Abstand zwischen dem Laminat und den Beabstandungselementen vorliegt; die Beabstandungselemente können das Laminat beispielsweise um einige Prozent der Dicke des Laminats überragen. Eine Höhe der Beabstandungselemente kann von dem Abstand zwischen dem Laminat und den Beabstandungselementen abhängen.

Optional weisen die Beabstandungselemente zumindest eines der folgenden Materialien auf: Stahl, Kunststoff, Silikon, Hartgummi, ein Basismaterial mit einer Antihaftbeschichtung.

Optional sind die Beabstandungselemente austauschbar mit dem umlaufenden Band verbunden, um Rahmen zu bilden, die eine an verschiedene Laminate angepasste Größe und/oder Höhe aufweisen.

So könnten beispielsweise lediglich Halterungen an dem umlaufenden Band befestigt sein, in welche jeweils für bestimmte Laminate geeignete Elemente eingesteckt werden können, um die Beabstandungselemente zu bilden. Sind die Beabstandungselemente mit einer Schleppstange des Bandes verbunden ausgeführt, kann die Verbindung mit der Schleppstange lösbar sein, so dass verschiedene Beabstandungselemente für entsprechend verschiedene Laminate mit der Schleppstange verbunden werden können.

Optional ist das umlaufende Band ein Transportband, das ausgebildet, um darauf das Laminat aufzulegen und zumindest teilweise durch das System zum Laminieren zu transportieren, oder ein Releaseband, das ausgebildet, um beim Laminieren zwischen der Membran und dem Laminat zu liegen und nach dem Laminieren eine Ablösung der Membran vom Laminat zu begünstigen.

Das Transportband bzw. Transportsheet kann insbesondere ein Material wie z.B. Teflon aufweisen, das geeignet ist, das Laminat nach dem Laminieren leicht vom Transportband abzuheben und eine Anhaftung von aus dem Laminat austretendem Material zu verhindern. Zudem ist das Transportband vorteilhafterweise ausreichend druck- und hitzebeständig, um während des Laminierens seine Funktion als Ablage des Laminats gewährleisten zu können. Das Releaseband bzw. Releasesheet kann zudem ausgebildet sein, um das Laminat zu schützen.

Optional umfasst die Beabstandungsvorrichtung als umlaufendes Band ein Releasesheet, auf dem Beabstandungselemente aufgebracht sind, und dazu ein weiteres umlaufendes Band mit weiteren Beabstandungselementen, wobei das weitere umlaufende Band ein Transportband ist, das ausgebildet ist, um das Laminat zum Laminieren zu transportieren. Zudem können die weiteren Beabstandungselemente des Transportbands so ausgebildet sein, dass sie mit zumindest einigen der Beabstandungselemente beim Laminieren in Eingriff gelangen, und so einen stufenlosen Rahmen für das Laminat bilden, umdadurch beim Laminieren die Kantenverpressung des Laminats zu unterdrücken.

Der Begriff stufenlos soll dabei insbesondere eine gleichmäßige Höhe des Rahmens bedeuten. Beispielsweise ist eine Befestigung der Beabstandungselemente an dem sich unterhalb der Laminate befindenden Transport-Sheet möglich, aber auch an dem sich oberhalb der Laminate befindenden Release-Sheet. Ebenso kann ein Teil der Aufbauhöhe des Rahmens auf dem Transport-Sheet und der andere Teil der Aufbauhöhe auf dem Release-Sheet aufgebracht werden, sodass die Zielhöhe des Rahmens erreicht wird, wenn beide Aufbauhöhen im Prozess des Laminierens übereinander liegen.

Optional umfasst die Vielzahl von Beabstandungselementen zumindest zwei Beabstandungselemente, die ausgebildet sind, um bei der Bildung des zumindest teilweisen Rahmens während des Laminierens reißverschlussartig ineinanderzugreifen.

Die ineinandergreifenden Beabstandungselemente können an demselben Band oder an verschiedenen Bändern angebracht sein.

Optional kann weiter mindestens eines der Beabstandungselemente eine Abschrägung aufweisen, um eine Standzeit oder Lebensdauer der Membran zu verlängern. Ohne Abschrägungen können scharfe Kanten der Beabstandungselemente in die Membran einschneiden und diese so beschädigen. Alternativ oder zusätzlich ist die Form auch geeignet, um eine Kraft in horizontale Kraft Richtung zu dem Laminat auszuüben, wodurch Zwischenräume zwischen den Beabstandungselementen und dem Laminat verringert werden können, um so Lufteinschlüsse zu minimieren (zumindest, wenn die Beabstandungselemente eine gewisse Flexibilität aufweisen).

Die vorliegende Erfindung bezieht sich zudem auf ein Verfahren zu einer Herstellung einer Beabstandungsvorrichtung für ein System zum Laminieren eines Laminats, insbesondere eines Photovoltaikmoduls. Dabei umfasst das System eine Membranhalteeinrichtung, die ausgebildet ist, um eine Membran zum Laminieren auf das Laminat unter Ausübung eines mechanischen Drucks aufzubringen. Das Verfahren umfasst folgende Schritte:
Bereitstellen eines umlaufenden Bands;
Befestigen einer Vielzahl von Beabstandungselementen an dem umlaufenden Band, so dass die Beabstandungselemente während des Laminierens zumindest teilweise einen Rahmen um das Laminat bilden und dadurch beim Aufbringen der Membran auf das Laminat eine Kantenverpressung des Laminats beim Laminieren unterdrücken;
lösbares Verbinden zumindest einer Schleppstange mit den Beabstandungselementen, wobei der zumindest teilweise ausgebildete Rahmen an der zumindest einen Schleppstange befestigt ist.

Die Beabstandungsvorrichtung soll somit insbesondere ein Durchbiegen der Kante des Laminats beim Laminieren verhindern, und zwar durch eine mechanische Abstützung, die durch die Beabstandungselemente bewirkt wird. Die Beabstandungselemente stützen dabei die Membran direkt und/oder indirekt (beispielsweise bei einem zwischen Membran und Beabstandungsvorrichtung verlaufendem Releasesheet) in einer über das Laminat hinausragenden Fläche der Membran so ab, dass zusätzlicher Druck, der im Randbereich des Laminats durch die Spannung der Membran ausgeübt wird, zumindest reduziert wird.

Vorteile von Ausführungsbeispielen einer Beabstandungsvorrichtung wie vorangehend beschrieben umfassen dabei insbesondere auch die Möglichkeit einer kostengünstige Fertigung, welche lediglich einer Geometrie eines bereits bestehenden Systems zum Membranlaminieren angepasst werden und in ein solches auch nachträglich eingebaut werden kann.

### KURZBESCHREIBUNG DER FIGUREN

Die Ausführungsbeispiele der vorliegenden Erfindung werden besser verstanden von der folgenden detaillierten Beschreibung und den beiliegenden Zeichnungen, die jedoch nicht so verstanden werden sollten, dass sie die Offenbarung auf die spezifischen Ausführungsformen einschränken, sondern lediglich der Erklärung und dem Verständnis dienen.
- Fig. 1: zeigt eine Beabstandungsvorrichtung für ein System zum Laminieren eines Laminats.
- Fig. 2: zeigt zweimal einen Querschnitt eines weiteren Ausführungsbeispiels für eine Beabstandungsvorrichtung für ein System zum Laminieren eines Laminats.
- Fig. 3: zeigt Aufsichten auf zwei Ausführungsbeispiele für die Beabstandungsvorrichtung für ein Transportband, welches an Schleppstangen geführt wird.
- Fig. 4: zeigt einen Querschnitt für eine an Schleppstangen befestigte Beabstandungsvorrichtung.
- Fig. 5: zeigt weitere Details von Beabstandungselementen in einem Querschnitt eines Systems zum Laminieren mit Beabstandungsvorrichtung.
- Fig. 6: zeigt eine Darstellung für ein Zustandekommen einer Kantenverpressung in einem herkömmlichen System zum Laminieren ohne Beabstandungsvorrichtung.
- Fig. 7: zeigt Schritte eines Verfahrens zur Herstellung einer Beabstandungsvorrichtung für ein System zum Laminieren eines Laminats mit einer Membran.

### DETAILLIERTE BESCHREIBUNG

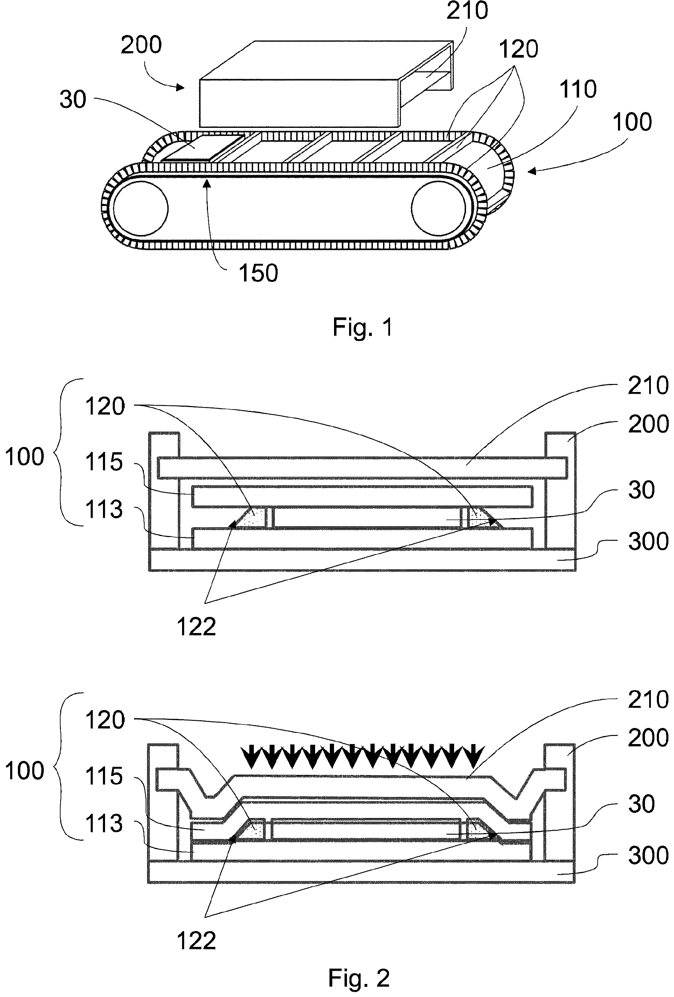

**Fig. 1** zeigt ein Ausführungsbeispiel für eine Beabstandungsvorrichtung 100 für ein System zum Laminieren eines Laminats 30, insbesondere von Photovoltaikmodulen. Das System umfasst eine Membranhalteeinrichtung 200, die ausgebildet ist, um zum Laminieren eine Membran 210 auf das Laminat 30 unter Ausübung eines Drucks aufzubringen. Die Beabstandungsvorrichtung 100 umfasst ein umlaufendes, über Umlenkrollen geführtes Band 110 und eine Vielzahl von Beabstandungselementen 120, die mit dem Band verbunden und ausgebildet sind, um zumindest in einem Abschnitt des umlaufenden Bandes 110 einen Rahmen 150 für das Laminat 30 zu bilden und dadurch beim Laminieren eine Kantenverpressung des Laminats 30 durch die Membran 210 zu unterdrücken.

Um die Randverpressung durch die Membran 210 zu vermeiden, sollte die aktive Pressfläche der Membran 210 nicht größer sein als das zu fertigende Laminat 30. Dies wird hier durch die Vielzahl von Beabstandungselementen 120, die Rahmen 150 für das Laminat 30 bilden, erreicht. Der Rahmen 150 ist vorteilhafterweise nur unwesentlich größer als die Laminat-Außenkanten und hat zumindest die Höhe des zu fertigenden Laminats 30. Das Laminat 30 wird vorteilhafterweise vor Prozessstart im Laminationsrahmen 150 platziert. Durch den Schutz des Rahmens 150 vor Überpressung der Kanten durch die Membran 210 können Laminate 30 ohne Randverpressung gefertigt werden. Ein Abstand der Beabstandungselemente 120 vom Laminat 30 ist auch von einer Ablagegenauigkeit des Laminats 30 auf dem Band 110 abhängig. Die Ablagegenauigkeit variiert zwischen verschiedenen Systemen zum Laminieren. In Beispielen kann der Abstand zwischen Laminat 30 und Rahmen 150 in einer Größenordnung von 3 bis 7 mm liegen. Das Ausführungsbeispiel ermöglicht so einen automatisierten Prozess ohne manuelles Handling und Laminate 30 ohne Rand- bzw. Kantenverpressung.

In der dargestellten Figur übernimmt das umlaufende Band 110 insbesondere den Transport des Laminats 30 durch zumindest Teile des Systems zum Laminieren. Auf einem solchen Transportsheet werden die Laminate 30 eingefördert und vor Prozessstart abgelegt. Ausführungen, in denen ein anderes Band 110 als das Transportsheet mit Beabstandungselementen 120 ausgebildet ist, sind denkbar. Insbesondere können mehrere Bänder 110 existieren, deren jeweilige Beabstandungselemente 120 beim Laminieren gemeinsam einen Rahmen 150 für das Laminat 30 bilden. Dazu können die Beabstandungselemente 120 auch nach Art eines Reißverschlusses ineinandergreifen.

Die Beabstandungselemente 120 sind in der dargestellten Figur auf dem Band 110 fixiert. Die Beabstandungselemente 120 können auch größere Rahmen 150 bildende Strukturen sein, die nur an bestimmten Stellen mit dem Band 110 verbunden sein müssen. Die Beabstandungselemente 120 können auswechselbar sein, so dass mit verschiedenen Beabstandungselementen 120 Rahmen 150 für verschiedene Laminate 30 gebildet werden können.

**Fig. 2** zeigt übereinander angeordnet zwei Mal einen Querschnitt durch einen Teil eines Systems zum Laminieren mit einer Membranhalteeinrichtung 200 und einer Membran 210, die zum Laminieren auf ein Laminat 30 aufgebracht wird. Das Laminat 30 liegt auf einem umlaufenden Transportband bzw. Transportsheet 113 über einer Heizplatte 300. Zwischen der Membran 210 und dem Laminat 30 verläuft ein ebenfalls umlaufendes Releaseband 115, welches das Laminat 30 beispielsweise vor Verschmutzung schützt und ein Abheben der Membran 210 vom Laminat 30 nach dem Laminieren erleichtert. In Systemen zum Laminieren kann eine Dicke des Releasesheets 300 beispielsweise 0.3 mm betragen. Neben dem Laminat 30 sind Beabstandungselemente 120 dargestellt, die ein Überpressen der Kanten des Laminats 30 durch die Membran 210 verhindern sollen. Im dargestellten Ausführungsbeispiel werden die Beabstandungselemente 120 an den Sheets 113, 115 im Laminator befestigt. Hierbei ist eine Befestigung an dem sich unterhalb des Laminats 30 befindenden Transportsheet 113 und/oder an dem sich oberhalb des Laminats 30 befindenden Release-Sheet 115 möglich. Der durch die Beabstandungselemente 120 gebildete Rahmen 150 kann Öffnungen aufweisen, die senkrecht zum Laminat 30 positioniert sind und eine Evakuierung eines Bereichs um die Laminate 30 erleichtern. Abschrägungen 122 an Kanten der Beabstandungselemente 120 erhöhen die Standzeit der Membran 210.

Im oben in der Figur dargestellten Querschnitt wird die Membran 210 auf das Laminat 30 bzw. auf das Releasesheet 115 abgesenkt. Dadurch schließt die Membran 210 um das Laminat 30 eine Laminatkammer ab. Im unteren Querschnitt ist durch die Pfeile oberhalb der Membran 210 ein Druck dargestellt, der die Membran 210 auf Releasesheet 115 und Laminat 30 drückt. Der Druck kann beispielsweise durch einen Überdruck eines Fluids (z.B.Luft) oberhalb der Membran 210, aber auch durch eine Evakuierung von Luft aus der Laminatkammer erzeugt oder unterstützt werden. Während des Laminierens wird über eine unterhalb des Transportsheets 113 dargestellte Heizplatte 300 dem Laminat 30 zum Laminieren Wärme zugeführt.

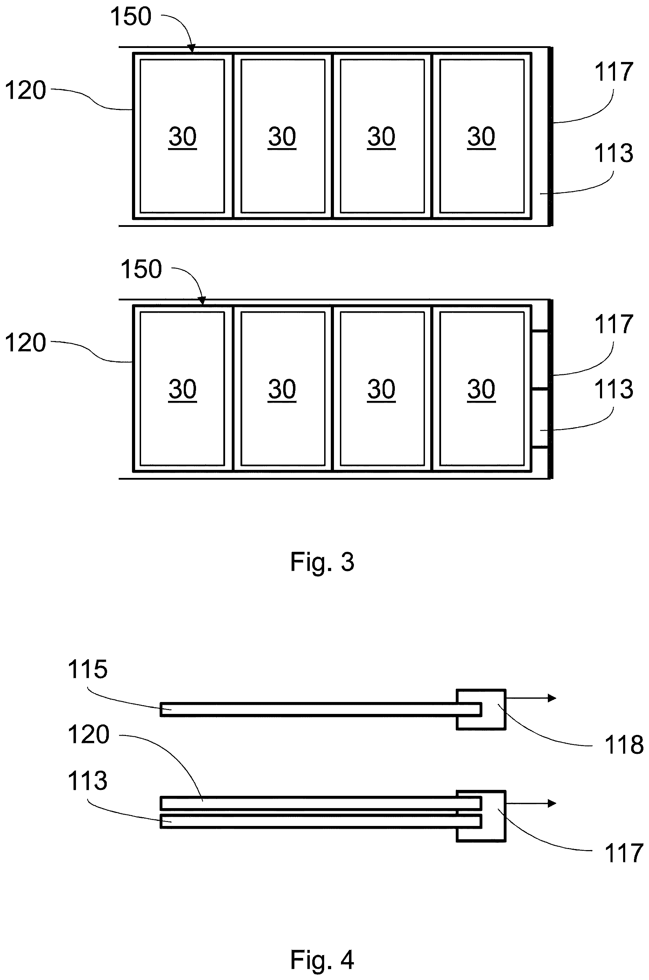

**Fig. 3** zeigt übereinander zwei Aufsichten auf jeweils ein Ausführungsbeispiel für die Beabstandungsvorrichtung 100. In beiden Teilen der Figur ist jeweils eine Aufsicht auf einen Abschnitt eines umlaufenden Transportbands 113 dargestellt, welches über Schleppstangen 117 durch das System zum Laminieren gezogen wird. In Beispielen für Membranlaminationssysteme sind sowohl ein Transportband 113 als auch ein Releaseband 115 (hier nicht dargestellt) an solchen Schleppstangen 117 befestigt und werden von diesen durch eine oder mehrere Laminatkammern bzw. Teile des Systems zum Laminieren geführt. Das Transportband 113 kann durchgehend oder auch unterbrochen sein; insbesondere kann auf der rechten Seite der Schleppstange 117 jeweils ein weiterer Abschnitt des Transportbands 113 angrenzen, oder das Transportband 113 kann dort unterbrochen sein. Auf dem Transportband 113, dessen Umlaufrichtung jeweils beispielsweise in Richtung des rechten Bildrands weist, liegen mehrere Laminate 30 in aus Beabstandungselementen 120 gebildeten Rahmen 150.

Im oberen Teil der Figur sind die Beabstandungselemente 120 direkt auf das Transportband 113 befestigt. Die Rahmen 150 können auch in Transportrichtung ausgedehnte Beabstandungselemente 120 aus dehnbarem bzw. flexiblem, aber druckfestem Material aufweisen, das ein Umlaufen der Rahmen 150 ermöglicht.

Im unteren Teil der Figur sind die Rahmen 150 für die einzelnen Laminate 30 als ein Beabstandungselement 120 ausgeführt, das nicht direkt am Transportband, sondern wie das Transportband 113 an der Schleppstange 117 befestigt und wird von dieser geführt wird.

**Fig. 4** zeigt einen Querschnitt für das Ausführungsbeispiel im unteren Teil der Figur 3. Zu sehen ist eine untere Schleppstange 117 und eine obere Schleppstange 118, für eine nach rechts im Bild weisende Umlaufrichtung. An der unteren Schleppstange 117 ist ein Transportband 113 befestigt, an der obere Schleppstange 118 ein Releaseband 115. Beide Schleppstangen 117, 118 ziehen die Bänder 113, 115 durch das System zum Laminieren. Die Bänder 113, 115 können dabei jeweils durchgehend oder auch unterbrochen sein; insbesondere kann jeweils auf der rechten Seite der Schleppstangen 117, 118 ein weiterer Abschnitt des jeweiligen Bandes 113, 115 angrenzen, oder das jeweilige Band 113, 115 kann dort unterbrochen sein.

An der unteren Schleppstange 117 ist zudem ein Beabstandungselement 120 befestigt, welches auf dem Transportband 113 aufliegt. Das Beabstandungselement 120 kann beispielsweise an der Schleppstange 117 geschraubt, geschweißt oder geklemmt sein.

Das Beabstandungselement 120 weist Rahmen 150 für ein oder mehrere Laminate 30 auf (hier nicht dargestellt). Das Beabstandungselement 120 könnte alternativ auch an der Schleppstange 118 befestigt sein und von dieser gezogen werden.

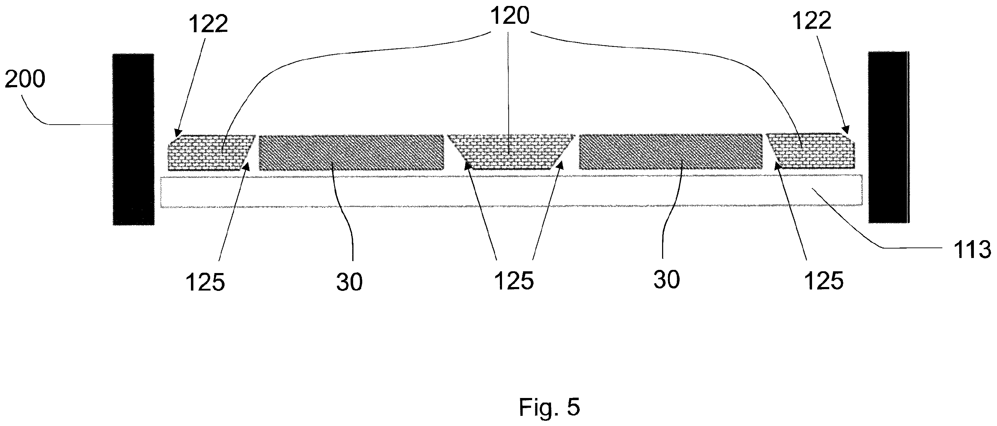

**Fig. 5** zeigt weitere Details von Beabstandungselementen 120 für ein Ausführungsbeispiel der Beabstandungsvorrichtung 100. Gezeigt ist ein Querschnitt durch ein Transportband 113, ein von Beabstandungselementen 120 eingerahmtes Laminat 30 sowie ein Teil einer Membranhalteeinrichtung 200. Die Beabstandungselemente 120 sind dabei mit dem Transportband 113 verbunden. Sie weisen eine Form auf, welche ein Austreten von Material aus dem Laminat 30 während des Laminierens ermöglichen soll. Insbesondere kann beispielsweise EVA aus der Kunststoffschicht 37 (vgl. Figur 6) beim Laminieren aus dem Laminat 30 austreten. Im dargestellten Ausführungsbeispiel handelt es sich bei der Form der Beabstandungselemente 120 um die Abschrägungen 125. Durch die Beabstandungselemente 120 wird ein Ausfluss von Einkapselungsmaterial reduziert, da die Laminatkanten nicht überpresst werden. Das Risiko des Verklebens wird dadurch bereits verringert oder minimiert. Die Beabstandungselemente 120 erhalten durch die Abschrägungen 125 eine Schräge zur Laminatkante, damit herausfließendes Einkapselungsmaterial möglichst wenig Kontaktfläche mit den Beabstandungselementen 120 hat. Austretendes Material gelangt durch diese Form auf das Transportband 113. Dabei ist es vorteilhaft, wenn die Beabstandungselemente 120 ebenso wie das Transportband 113 eine Antihaftbeschichtung aus Material aufweist, welches ein Anhaften von ausgetretenem Material verhindert (wie z.B. Teflon).

Zudem weisen die äusseren Beabstandungselemente 120 Abschrägungen 122 auf, die dem Schutz der von oben aufgedrückten Membran 210 (hier nicht dargestellt) dienen. Scharfe Kanten können die Membran 210, deren Dicke im Bereich unter einem Zentimeter liegen kann, verletzen; die Abschrägungen 122 erlauben ein Anschmiegen der Membran 210 über eine größere Fläche und erhöhen so eine Standzeit der Membran 210.

**Fig. 7** zeigt Schritte eines Verfahrens zur Herstellung einer Beabstandungsvorrichtung 100 für ein System zum Laminieren eines Laminats 30, insbesondere eines Photovoltaikmoduls, wobei das System eine Membranhalteeinrichtung 200 umfasst, die ausgebildet ist, um eine Membran 210 zum Laminieren auf das Laminat 30 unter Ausübung eines Drucks aufzubringen. Ein erster Schritt umfasst ein Bereitstellen S100 eines umlaufenden Bands 110, welches Teil eines bestehenden Systems sein kann. Ein weiterer Schritt umfasst ein Befestigen S200 einer Vielzahl von Beabstandungselementen 120 an dem umlaufenden Band 110, auf eine Weise, dass die Beabstandungselemente 120 während des Laminierens zumindest teilweise einen Rahmen 150 um das Laminat 30 bilden und dadurch beim Aufbringen der Membran 210 auf das Laminat 30 eine Kantenverpressung des Laminats 30 beim Laminieren unterdrücken.

Die in der Beschreibung, den Ansprüchen und den Figuren offenbarten Merkmale der Erfindung können sowohl einzeln als auch in beliebiger Kombination für die Verwirklichung der Erfindung wesentlich sein.

### BEZUGSZEICHENLISTE

- 30: Laminat
- 100: Beabstandungsvorrichtung
- 110: umlaufendes Band
- 113: Transportband (Transportsheet)
- 115: Releaseband (Releasesheet)
- 117, 118: Schleppstangen
- 120: Beabstandungselemente
- 122: Abschrägung zur Erhöhung einer Membranstandzeit
- 125: Aussparung zur Aufnahme von austretendem Material
- 150: Rahmen
- 200: Membranhalteeinrichtung
- 210: Membran
- 300: Heizplatte

## Patentansprüche

1. Eine Beabstandungsvorrichtung (100) für ein System zum Laminieren eines Laminats (30), insbesondere von Photovoltaikmodulen, wobei das System eine Membranhalteeinrichtung (200) umfasst, die ausgebildet ist, um zum Laminieren eine Membran (210) auf das Laminat (30) unter Ausübung eines Drucks aufzubringen, die Beabstandungsvorrichtung (100) umfasst:
ein umlaufendes Band (110);
eine Vielzahl von Beabstandungselementen (120), die mit dem Band verbunden und ausgebildet sind, um zumindest in einem Abschnitt des umlaufenden Bandes (110) zumindest teilweise einen Rahmen (150) für das Laminat (30) zu bilden und dadurch beim Laminieren eine Kantenverpressung des Laminats (30) zu unterdrücken;
**dadurch gekennzeichnet, dass** die Beabstandungsvorrichtung zumindest eine Schleppstange (117, 118) umfasst, die lösbar mit den Beabstandungselementen (120) verbindbar ist und der zumindest teilweise ausgebildete Rahmen (150) an der zumindest einen Schleppstange (117, 118) befestigt ist.

2. Die Beabstandungsvorrichtung (100) nach Anspruch 1, wobei das Laminieren ein Ausbilden eines Unterdruckes umfasst, und wobei
die Beabstandungselemente (120) so ausgebildet sind, dass der ausgebildete Rahmen (150) Öffnungen aufweist, um beim Laminieren einen Austritt von Gas aus einem Bereich in oder um das Laminat (30) zu begünstigen.

3. Die Beabstandungsvorrichtung (100) nach einem der vorhergehenden Ansprüche, wobei beim Laminieren eine Verschmelzung von Kunststoff in dem Laminat (30) erfolgt, und wobei
die Beabstandungselemente (120) so ausgebildet sind, dass der ausgebildete Rahmen (150) Aussparungen (125) aufweist oder einen Spalt zu dem Laminat (30) bildet, um austretenden Kunststoff beim Laminieren aufzunehmen.

4. Die Beabstandungsvorrichtung (100) nach einem der vorhergehenden Ansprüche,
wobei die Membranhalteeinrichtung (200) ausgebildet ist, um die Membran (210) in einer vertikalen Bewegung auf das Laminat (30) aufzubringen, und wobei die Beabstandungselemente (120) so ausgebildet sind, dass beim Aufbringen der Membran (210) auf das Laminat (30) der ausgebildete Rahmen (150) mit dem Laminat (30) bündig abschließt.

5. Die Beabstandungsvorrichtung (100) nach einem der vorhergehenden Ansprüche, wobei die Beabstandungselemente (120) zumindest eines der folgenden Materialien aufweisen:
- Stahl,
- Kunststoff,
- Silikon,
- Hartgummi,
- ein Basismaterial mit einer Antihaftbeschichtung.

6. Die Beabstandungsvorrichtung (100) nach einem der vorangehenden Ansprüche, wobei die Beabstandungselemente (110) austauschbar mit dem umlaufenden Band verbunden sind, um Rahmen (150) zu bilden, die eine an verschiedene Laminate angepasste Größe und/oder Höhe aufweisen.

7. Die Beabstandungsvorrichtung (100) nach einem der vorhergehenden Ansprüche, wobei das umlaufende Band (110) eines der folgenden ist:
ein Transportband (113), das ausgebildet, um darauf das Laminat (30) aufzulegen und zumindest teilweise durch das System zum Laminieren zu transportieren,
ein Releaseband (115), das ausgebildet, um beim Laminieren zwischen der Membran (210) und dem Laminat (30) zu liegen und nach dem Laminieren eine Ablösung der Membran (210) vom Laminat (30) zu begünstigen.

8. Die Beabstandungsvorrichtung (100) nach einem der Ansprüche 1 bis 6, wobei
das umlaufende Band (110) ein Releaseband (115) ist, das ausgebildet ist, um beim Laminieren zwischen der Membran (210) und dem Laminat (30) zu liegen und nach dem Laminieren eine Ablösung der Membran (210) vom Laminat (30) zu begünstigen;
und wobei die Beabstandungsvorrichtung (100) außerdem Folgendes umfasst:
ein weiteres umlaufendes Band mit weiteren Beabstandungselementen, wobei das weitere umlaufende Band ein Transportband (113) ist, das ausgebildet ist, um das Laminat (30) zum Laminieren zu transportieren,
und die weiteren Beabstandungselemente ausbildet sind, um mit zumindest einigen der Beabstandungselemente (120) beim Laminieren in Eingriff zu gelangen, um einen stufenlosen Rahmen (150) für das Laminat (30) zu bilden und dadurch beim Laminieren eine Kantenverpressung des Laminats (30) zu unterdrücken.

9. Die Beabstandungsvorrichtung (100) nach Anspruch 8, wobei die Vielzahl von Beabstandungselementen (120) zumindest zwei Beabstandungselemente umfasst, die ausgebildet sind, um bei der Bildung des zumindest teilweisen Rahmens (150) während des Laminierens reißverschlussartig ineinanderzugreifen.

10. Die Beabstandungsvorrichtung (100) nach einem der vorhergehenden Ansprüche, wobei mindestens eines der Beabstandungselemente (120) eine Abschrägung (122) aufweist, um eine Standzeit der Membran (210) zu verlängern und/oder geeignet ist, um beim Aufbringen der Membran (210) auf dem Laminat (30) durch den über die Membran (210) auf das Beabstandungselement ausgeübten mechanischen Druck einen Druck in Richtung des Laminats (30) aufzubauen.

11. Ein Verfahren zur Herstellung einer Beabstandungsvorrichtung (100) für ein System zum Laminieren eines Laminats (30), insbesondere eines Photovoltaikmoduls, wobei das System eine Membranhalteeinrichtung (200) umfasst, die ausgebildet ist, um eine Membran (210) zum Laminieren auf das Laminat (30) unter Ausübung eines mechanischen Drucks aufzubringen, das Verfahren umfasst folgende Schritte:
Bereitstellen (S100) eines umlaufenden Bands (110);
Befestigen (S200) einer Vielzahl von Beabstandungselementen (120) an dem umlaufenden Band (110), so dass die Beabstandungselemente (120) während des Laminierens zumindest teilweise einen Rahmen (150) um das Laminat (30) bilden und dadurch beim Aufbringen der Membran (210) auf das Laminat (30) eine Kantenverpressung des Laminats (30) beim Laminieren unterdrücken;
**dadurch gekennzeichnet, dass** das Verfahren ein lösbares Verbinden zumindest einer Schleppstange (117, 118) mit den Beabstandungselementen (120) umfasst, wobei der zumindest teilweise ausgebildete Rahmen (150) an der zumindest einen Schleppstange (117, 118) befestigt ist.

## Claims

1. A spacing device (100) for a system for laminating a laminate (30), in particular of photovoltaic modules, the system comprising a membrane holding mechanism (200) which is designed, for lamination, to apply a membrane (210) to the laminate (30) by exerting pressure, the spacing device (100) comprising:
a circulating belt (110);
a plurality of spacing elements (120) which are connected to the belt and designed to at least partially form a frame (150) for the laminate (30) in at least a portion of the circulating belt (110) and thereby suppress edge compression of the laminate (30) during lamination;
**characterized in that** the spacing device
comprises at least one tow bar (117, 118) which is detachably connectable to the spacing elements (120) and the at least partially formed frame (150) is fastened to the at least one tow bar (117, 118).

2. The spacing device (100) according to claim 1, wherein the lamination comprises forming a negative pressure, and wherein
the spacing elements (120) are designed such that the formed frame (150) has openings to promote the escape of gas from a region in or around the laminate (30) during lamination.

3. The spacing device (100) according to either of the preceding claims, wherein during lamination, a fusion of plastics material in the laminate (30) takes place, and wherein the spacing elements (120) are designed such that the formed frame (150) has recesses (125) or forms a gap to the laminate (30) in order to accommodate escaping plastics material during lamination.

4. The spacing device (100) according to any of the preceding claims,
wherein the membrane holding mechanism (200) is designed to apply the membrane (210) to the laminate (30) in a vertical movement, and wherein the spacing elements (120) are designed such that when the membrane (210) is applied to the laminate (30), the formed frame (150) is flush with the laminate (30).

5. The spacing device (100) according to any of the preceding claims, wherein the spacing elements (120) comprise at least one of the following materials:
- steel,
- plastics material,
- silicone,
- hard rubber,
- a base material with a nonstick coating.

6. The spacing device (100) according to any of the preceding claims, wherein the spacing elements (110) are interchangeably connected to the circulating belt to form frames (150) which have a size and/or height adapted to different laminates.

7. The spacing device (100) according to any of the preceding claims, wherein the circulating belt (110) is one of the following:
a conveyor belt (113) designed for the laminate (30) to be placed thereon and to transport it at least partly through the lamination system, a release belt (115) designed to lie between the membrane (210) and the laminate (30) during lamination and to promote detachment of the membrane (210) from the laminate (30) after lamination.

8. The spacing device (100) according to any of claims 1 to 6, wherein
the circulating belt (110) is a release belt (115) which is designed to lie between the membrane (210) and the laminate (30) during lamination and to promote detachment of the membrane (210) from the laminate (30) after lamination;
and wherein the spacing device (100) further comprises the following: a further circulating belt with further spacing elements, wherein the further circulating belt is a conveyor belt (113) designed to transport the laminate (30) for lamination,
and the further spacing elements are designed to engage with at least some of the spacing elements (120) during lamination to form a stepless frame (150) for the laminate (30) and thereby suppress edge compression of the laminate (30) during lamination.

9. The spacing device (100) according to claim 8, wherein the plurality of spacing elements (120) comprises at least two spacing elements which are designed to engage in a zip-like manner with each other upon formation of the at least partial frame (150) during lamination.

10. The spacing device (100) according to any of the preceding claims, wherein at least one of the spacing elements (120) has a bevel (122) in order to extend a service life of the membrane (210) and/or is suitable for building up a pressure in the direction of the laminate (30) when the membrane (210) is applied to the laminate (30) by the mechanical pressure exerted on the spacing element via the membrane (210).

11. A method for producing a spacing device (100) for a system for laminating a laminate (30), in particular of a photovoltaic module, the system comprising a membrane holding mechanism (200) which is designed to apply a membrane (210) for lamination to the laminate (30) by exerting mechanical pressure, the method comprising the following steps:
providing (S100) a circulating belt (110);
fastening (S200) a plurality of spacing elements (120) to the circulating belt (110) such that the spacing elements (120) at least partially form a frame (150) around the laminate (30) during lamination and thereby suppress edge compression of the laminate (30) during lamination when the membrane (210) is applied to the laminate (30);
**characterized in that** the method comprises detachably connecting at least one tow bar (117, 118) to the spacing elements (120),
the at least partially formed frame (150) being fastened to the at least one tow bar (117, 118).

## Revendications

1. Dispositif d'espacement (100) pour un système permettant la stratification d'un stratifié (30), en particulier de modules photovoltaïques, dans lequel le système comprend un appareil de maintien de membrane (200) réalisé pour appliquer une membrane (210) sur le stratifié (30) en exerçant une pression pour la stratification, le dispositif d'espacement (100) comprenant :
une bande circonférentielle (110) ;
une pluralité d'éléments d'espacement (120) reliés à la bande et réalisés pour former au moins partiellement un cadre (150) pour le stratifié (30) au moins dans une section de la bande circonférentielle (110) et pour réprimer ainsi une compression de bord du stratifié (30) lors de la stratification ;
**caractérisé en ce que** le dispositif d'espacement comprend au moins une barre de remorquage (117, 118) qui peut être reliée de manière amovible aux éléments d'espacement (120) et le cadre (150) au moins partiellement réalisé est fixé à l'au moins une barre de remorquage (117, 118).

2. Dispositif d'espacement (100) selon la revendication 1, dans lequel la stratification comprend une formation d'une pression négative, et dans lequel
les éléments d'espacement (120) sont réalisés de telle sorte que le cadre (150) réalisé présente des ouvertures afin de favoriser une sortie de gaz hors d'une zone dans le stratifié (30) ou autour de celui-ci lors de la stratification.

3. Dispositif d'espacement (100) selon l'une des revendications précédentes, dans lequel, lors de la stratification, une fusion de matière plastique est effectuée dans le stratifié (30), et dans lequel
les éléments d'espacement (120) sont réalisés de sorte que le cadre (150) réalisé présente des évidements (125) ou forme un interstice par rapport au stratifié (30) afin de recevoir la matière plastique sortante lors de la stratification.

4. Dispositif d'espacement (100) selon l'une des revendications précédentes,
dans lequel l'appareil de maintien de membrane (200) est réalisé pour appliquer la membrane (210) sur le stratifié (30) dans un mouvement vertical, et dans lequel les éléments d'espacement (120) sont réalisés de sorte que, lors de l'application de la membrane (210) sur le stratifié (30), le cadre (150) réalisé se termine en affleurement avec le stratifié (30).

5. Dispositif d'espacement (100) selon l'une des revendications précédentes, dans lequel les éléments d'espacement (120) présentent au moins l'un des matériaux suivants :
- acier,
- matière plastique,
- silicone,
- caoutchouc durci,
- un matériau de base comportant un revêtement antiadhésif.

6. Dispositif d'espacement (100) selon l'une des revendications précédentes, dans lequel les éléments d'espacement (110) sont reliés de manière interchangeable à la bande circonférentielle afin de former des cadres (150) présentant une taille et/ou une hauteur adaptées à différents stratifiés.

7. Dispositif d'espacement (100) selon l'une des revendications précédentes, dans lequel la bande circonférentielle (110) est l'une parmi les suivantes :
une bande transporteuse (113) réalisée pour y déposer le stratifié (30) et le transporter au moins partiellement à travers le système permettant la stratification, une bande de libération (115) réalisée pour s'interposer entre la membrane (210) et le stratifié (30) lors de la stratification et pour favoriser une libération de la membrane (210) du stratifié (30) après la stratification.

8. Dispositif d'espacement (100) selon l'une des revendications 1 à 6, dans lequel
la bande circonférentielle (110) est une bande de libération (115) réalisée pour s'interposer entre la membrane (210) et le stratifié (30) lors de la stratification et pour favoriser la libération de la membrane (210) du stratifié (30) après la stratification ;
et dans lequel le dispositif d'espacement (100) comprend en outre ce qui suit : une bande circonférentielle supplémentaire comportant des éléments d'espacement supplémentaires, dans lequel la bande circonférentielle supplémentaire est une bande transporteuse (113) réalisée pour transporter le stratifié (30) pour la stratification,
et les éléments d'espacement supplémentaires sont réalisés pour rejoindre au moins certains des éléments d'espacement (120) par une mise en prise lors de la stratification afin de former un cadre (150) continu pour le stratifié (30) et de réprimer ainsi la compression de bord du stratifié (30) lors de la stratification.

9. Dispositif d'espacement (100) selon la revendication 8, dans lequel la pluralité d'éléments d'espacement (120) comprend au moins deux éléments d'espacement réalisés pour venir en prise l'un dans l'autre à la manière d'une fermeture à glissière lors de la formation du cadre (150) au moins partiel pendant la stratification.

10. Dispositif d'espacement (100) selon l'une des revendications précédentes, dans lequel au moins l'un des éléments d'espacement (120) présente un biseau (122) afin de prolonger une durée de vie de la membrane (210) et/ou est adapté pour créer une pression en direction du stratifié (30) lors de l'application de la membrane (210) sur le stratifié (30) par la pression mécanique exercée sur l'élément d'espacement par l'intermédiaire de la membrane (210).

11. Procédé de fabrication d'un dispositif d'espacement (100) pour un système permettant la stratification d'un stratifié (30), en particulier d'un module photovoltaïque, dans lequel le système comprend un appareil de maintien de membrane (200) réalisé pour appliquer une membrane (210) pour la stratification sur le stratifié (30) en exerçant une pression mécanique, le procédé comprenant les étapes suivantes :
fourniture (S100) d'une bande circonférentielle (110) ;
fixation (S200) d'une pluralité d'éléments d'espacement (120) à la bande circonférentielle (110) de sorte que les éléments d'espacement (120) forment au moins partiellement un cadre (150) autour du stratifié (30) pendant la stratification et répriment ainsi, lors de l'application de la membrane (210) sur le stratifié (30), une compression de bord du stratifié (30) lors de la stratification ;
**caractérisé en ce que** le procédé comprend une liaison amovible d'au moins une barre de remorquage (117, 118) aux éléments d'espacement (120),
dans lequel le cadre (150) au moins partiellement réalisé est fixé à l'au moins une barre de remorquage (117, 118).
